Europäisches Patentamt

European Patent Office

Office européen des brevets

(11) Publication number: **0 429 305 A2**

# EUROPEAN PATENT APPLICATION

(21) Application number: 90312697.7

(22) Date of filing: 21.11.90

(51) Int. Cl.5: **G06F 15/16**

(30) Priority: 22.11.89 US 441127

(43) Date of publication of application:
**29.05.91 Bulletin 91/22**

(84) Designated Contracting States:
**DE FR GB**

(71) Applicant: **International Business Machines Corporation**
**Old Orchard Road**
**Armonk, N.Y. 10504(US)**

(72) Inventor: **MacLean, Neil Hector, Jr.**
**8611 East Calle Bogota**

**Tucson, AZ 85715(US)**
Inventor: **Miller, Robert William**
**731 North Ruston Avenue**
**Tucson, AZ 85711(US)**
Inventor: **Patel, Mayank Raman**
**9430 East Rosewood Street**
**Tucson, AZ 85710(US)**

(74) Representative: **Atchley, Martin John**
**Waldegrave**
**IBM United Kingdom Limited Intellectual**
**Property Department Hursley Park**
**Winchester Hampshire SO21 2JN(GB)**

(54) **Data processing system including a plurality of data processing devices operating in parallel.**

(57) The present invention relates to a data processing system comprising a plurality of data processing devices (17) adapted to perform data processing operations on an input stream of data, a control system for operating the data processing devices in parallel, and selection means (12) for selecting which data processing device is to receive for processing each item of data in the data stream.

According to the invention the data processing system is characterised in that said control system comprises dividing means for dividing the input stream of data into a sequence of sets of data, operation transfer control means for indicating when a set of data has been fully received by a data processing device, and means for operating the selection means in response to the output from the operation transfer control means to select
a first data processing device to receive for processing a first set of data,
a second data processing device to receive for processing the next set of data in the sequence, and
a different one of the plurality of data processing devices to receive for processing each subsequent set of data in the sequence of data.

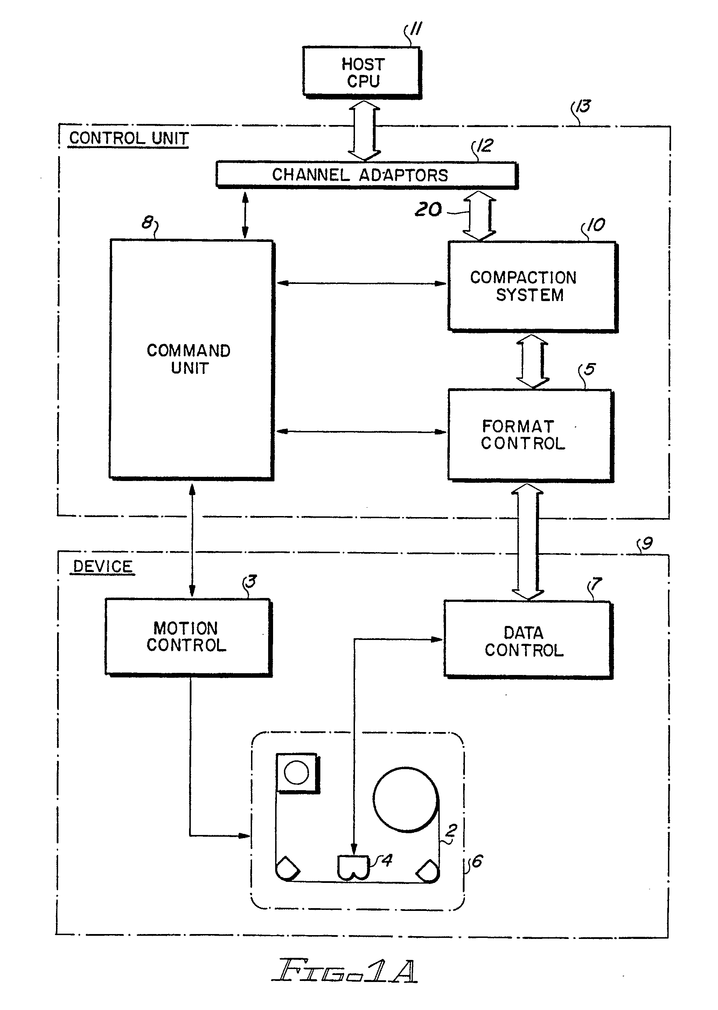

FIG. 1D    TO UTILIZATION DEVICE

# DATA PROCESSING SYSTEM INCLUDING A PLURALITY OF DATA PROCESSING DEVICES OPERATING IN PARALLEL

The present invention relates to a data processing system which includes a plurality of data processing devices operating in parallel.

Data processing systems, which handle ever increasing amounts of data, require data processing devices operating in parallel that have the ability to handle the increasing amounts of data. The control and sequencing of the processing operation generally requires extensive amounts of equipment to ensure that the maximum efficiency is obtained in the distribution of the data to each processing device.

The present invention relates to the provision of a simplified system for the control of the passing of a data stream through a plurality of parallel operating data processing devices.

In known arrangements, separate multiplexers and demultiplexers were required at the interface to each processing unit in order to control the distribution of data into each separate processing device. Thus a demultiplexer was required in order to distribute the data to each of the processing devices and a multiplexer was needed at the exits of the processing devices in order to reassemble the data. Separate multiplexers and demultiplexers were required if each processing device was a reversible type device such as a compactor0decompactor device where the data was compacted on passage through the processing device and the data was decompacted when it was returned through the processing device, for instance for placing the data into its original format as sent by a host central processing device.

The object of the present invention is to provide an improved data processing system of the type including a plurality of data processing devices operating in parallel.

The present invention relates to a data processing system comprising a plurality of data processing devices adapted to perform data processing operations on an input stream of data, a control system for operating the data processing devices in parallel, and selection means for selecting which data processing device is to receive for processing each item of data in the data stream.

According to the invention the data processing system is characterised in that the control system comprises dividing means for dividing the input stream of data into a sequence of sets of data, operation transfer control means for indicating when a set of data has been fully received by a data processing device, and means for operating the selection means in response to the output from the operation transfer control means to select

a first data processing device to receive for processing a first set of data,
a second data processing device to receive for processing the next set of data in the sequence, and
a different one of the plurality of data processing devices to receive for processing each subsequent set of the sequence of data.

In accordance with a preferred embodiment of the invention to be described herein, event counters are used in each data processing device for the input and output interfaces to control and verify the splitting and the merging of the data stream passing through each processing device. An incoming serial data stream is divided into a plurality of sets of data of a size to fit into a buffer unit of each processing device. When a processing device receives a set of data it processes the set while the next processing device in line receives the next set of data. The processed sets of data are stored into another buffer in each processing device and the output of this buffer is sent to the output interface in the same order that the data stream was received thus maintaining the original sequence.

In the arrangement to be described herein, a control unit, through channel adaptors, accepts the requests from a host central processing unit (CPO) to control a data recording device such as a magnetic tape recording device. The recording device could alternatively be a magnetic disc or optical recording device. Alternatively the recording device could be a plurality of recorders.

The control of the recording device for recording medium motion control is through a microprocessor and a device adaptor, and a motion control unit generally in the device. The motion control unit controls the carriage control for handling of the insertion and extraction of the medium, such as a tape, for the threading mechanism if the medium is a tape held within a cartridge, and for placing the medium in contact with a transducer for reading from and writing onto the medium. The motion control also controls the speed and tension of the tape medium for correct interaction with the transducer.

The data transfer to and from the medium via the transducer is through read and write circuits and formatters to a buffer control which operates under the control of the microprocessor to adapt the data usable by the host CPU into the type of data for storage onto a utilisation device, the recording medium device. The compaction and decompaction of the data by the control unit for storage and retrieval to and from the recording device is through a compaction system. The data from the channel adaptor is compacted in a compaction unit and an autoblocking unit of the compaction system and then written onto the medium by the transducer for storage. The compaction unit includes a plurality of processing devices. Event counters are used in each processing device for the input and output interfaces to control and verify the splitting and the merging of the data stream passing through the processing device. The incoming serial data stream is divided into the plurality of sets of data. den one processing device receives a set of data it then processes the set while the next processing device in line receives the next set of data. The processed sets of data are stored in each processing device and sent to the output interface and to the device for writing on the medium in the same order that the data stream was received, thus maintaining the original sequence.

To retrieve the compacted sets of data, a transducer reads the data from the medium as the medium is transported past the transducer under control of the motion control and the control unit. The data read by the transducer is amplified and converted, and directed through a buffer control to be decompacted by the processing devices of the compaction system to return the compacted data to the original state for transmission to the channel adaptors and the host CPU. The compacted sets of data are directed to each processing device where they are separated into individual sets and decoded, i.e. decompacted and reassembled.

Initially, the first processing device has control of the interface and activates the signal identifying that it is receiving a set of data from the data stream. The signal is active until the first processing device receives all of its set of data from the data stream. The first processing device then deactivates its output signal and the next processing device in turn will take control of the interface and activates its signal until it has received all of the second set of data from the data stream. At that time the second processing device deactivates its output and the next processing device, in turn, starts to receive its set of data. The sequence continues from the last processing device to the first processing devices until all the sets of data from the data stream have been received and processed.

In the compaction unit, each processing device has two interface event counters to count the number of sets of data transferred on each interface, input and output. Each processing device can thereby calculate when it should take control of the interface and verify that the previous processing device has relinquished control. Further, the processing device downstream of the processing device taking control to receive data can verify that the upstream processing device indeed has taken control. The transfer of the control of the interface occurs at data set boundaries. Each time an end of set is detected or, if the sets are of the fixed size, that is, when that amount of data has been received, the control of the interface is transferred from the present processing device to the next processing device downstream.

In the arrangement to be described herein, the block of data is divided into a plurality of sets of data of similar size for processing. Each set is directed to each of the processing devices for handling, such as for compacting the data. A storage control in the processing device accepts the data from the data stream and, when full, signals the compaction encoder to begin processing the stored set of data. The storage control acts as a register to store the sets of data, as a demultiplexer to distribute each set of data to a compaction encoder, for instance, and as a multiplexer to receive and reassemble each set of data after decompaction from the decoder.

After encoding, the compacted sets of data are reassembled in a second storage control that likewise acts as a register to store the compacted sets, as a multiplexer to reassemble the sets after compaction encoding, and as a demultiplexer to receive and separate the compacted sets of data for decompaction in a decoder.

Each processing unit guarantees that a determinable maximum amount of time is spent on each set of data thereby ensuring that a minimum data rate is accomplished for each unit. Therefore, the data flow for the total system can be increased by adding processing units since each processing device adds a process, e.g. encoding and decoding of that set of data from the data stream.

In order that the invention may be more readily understood an embodiment will now be described with reference to the accompanying drawings, in which:-

Figure 1A is a high level flow block diagram of a data processing system embodying the invention,

Figure 1B and 1C together form a more specific flow block diagram of the system illustrated in Figure 1A,

Figure 1D is a system block diagram showing the interconnection of a plurality of data processing devices, four shown, according to the invention,

Figure 2 is a diagrammatic representation of two of the data processing devices of Figure 1,

Figure 3 is a more detailed block diagram of one of the processing devices illustrated in Figure 1D, showing a compaction device, and

Figure 4 illustrates the format of the data as passed through the processing system illustrated.

In general, the present invention can be used with any data processing system which includes a plurality of data processing devices operating in parallel on the same data stream. The present invention is preferably for use with a magnetic tape recording system and in particular is for use in the IBM 3490 Tape Subsystem. The data processing devices comprise four data compaction encoders/decoders all running in parallel in order to maximise throughput of data and transmission bandwidth. Data is compacted (encoded) prior to being written on the tape medium and decompacted (decoded) subsequent to being read from the tape medium. The arrangement described herein will, therefore, be for a magnetic tape recording system with data compaction capabilities, but it should be understood that the arrangement could be adapted for use in any storage system, especially a magnetic tape and disk system and optical storage system. The invention could also be adapted for use in any parallel operating data processing or digital communication system which receives and packetises data. The data is then processed and remerged in its original form after processing for transmission to a utilisation device.

The requirements for ever increasing data throughput and transmission rates on high performance peripheral data storage subsystems dictate a parallel operating architecture for the data compaction units. The arrangement to be described provides the capability to control and verify the sequencing of the input and the output data streams such that the input data stream can be split, compacted or decompacted, and then re-emerge at a data rate equal to the number of compaction units times the data rate provided by each unit.

The arrangement to be described utilises four data processing devices as shown in Figure 1D. It should be evident that more or less processing devices could be used in parallel to accomplish the advantages of the arrangement to be described.

Referring to the Figures of the drawings, the same reference numerals indicate like structural features in operation in the various Figures.

Referring to Figure 1A, a data processing system is controlled by a host central processing unit (CPO) 11 to store and retrieve data that is required by the host unit. The data processing system includes at least one control unit 13 and at least one data utilisation device 9. The control unit 13 accepts the commands and data from the host 11 via one or more channel adaptors 12 and controls itself and the devices accordingly. The data utilisation device 9 could be a magnetic tape data recording device as shown, or magnetic disk or optical recorders.

The magnetic tape recording device 9 illustrated includes a means for controlling the handling of the tape medium, a tape motion control unit 3, and a mechanism in a drive unit 6 for transporting a tape 2 past a transducer 4 for writing data onto and reading data from the tape 2.

A data control unit 7 provides read and write circuits in the device 9 to operate the transducer 4. The data control unit is connected by a cable to a format control unit 5 in the control unit 13. The format control unit 5 is shown connected by a data transmission cable to a compaction system 10 which in turn is connected to the channel adaptors 12.

The motion control unit 3 is controlled by a command unit 8 in the control unit 13. The command unit 8 takes the commands transmitted to the channel adaptors 12 by the host CPU 11 and controls the operations of the drive unit 6 via the motion control unit 3, and the flow of data to and from the channel adaptors 12 through the format control unit 5 and the data control unit 7.

The compaction system 10 is shown inserted into the data flow to compact and decompact the data for storage on the tape medium 2 and retrieval from the tape medium 2, respectively.

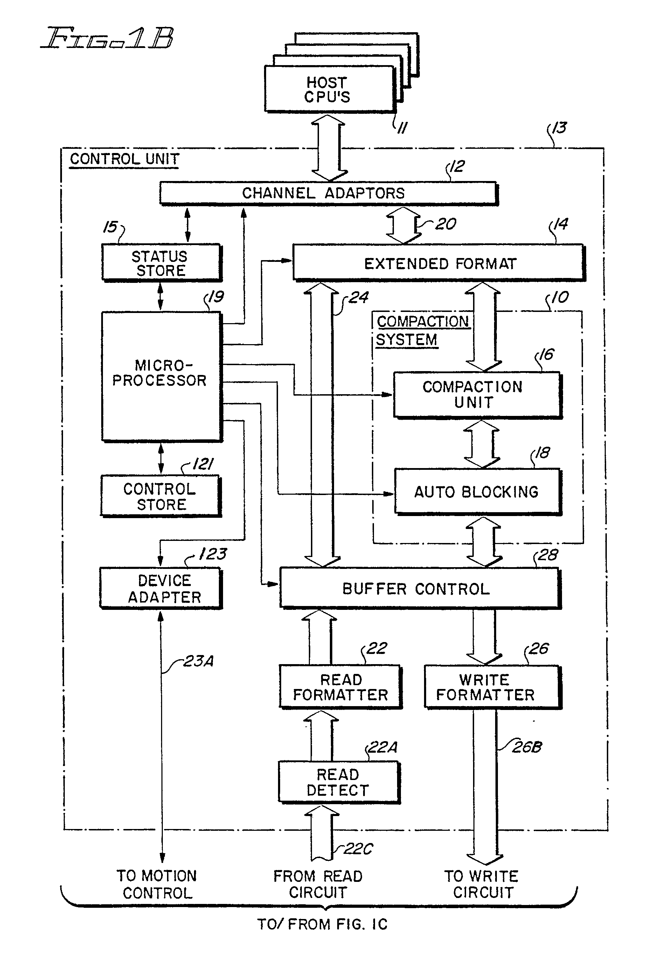

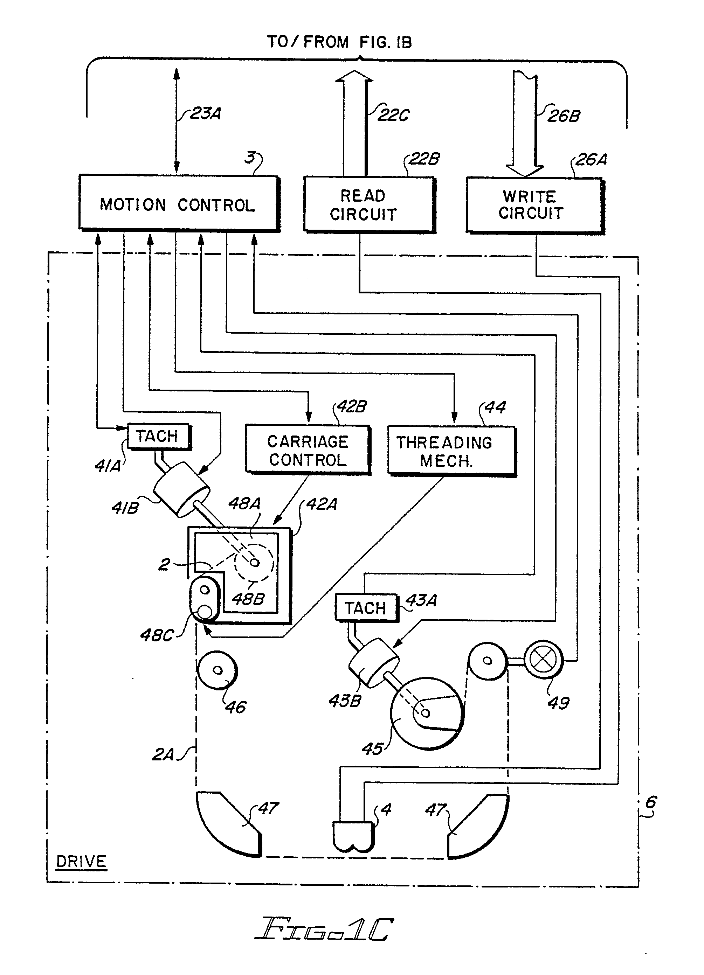

Figures 1B and 1C, taken together, show a more detailed block diagram of the data processing system of Figure 1A. Figure 1B is a block diagram of the control unit 13 and Figure 1C in a block diagram of the device 9. The bottom of Figure 1B is connected by cable and command lines to the top of Figure 1C as indicated.

Referring to Figure 1B, the command unit 8 of Figure 1A includes a status store 15, a microprocessor 19, a control store 121 and a device adapter 123. An extended format unit 14 is essentially a part of the command unit 8 in the control of the data flow. The extended format unit 14 provides the capability of providing no compaction or decompaction of the data by bypassing the compaction system 10 as shown by a data cable 24.

A buffer control unit 28 operates under control of the microprocessor 19 during a data write cycle to store the data written on the tape 2 by a write formatter unit 26 and a write circuit 26A (Figure 1C) to the transducer 4. The buffer control unit 28 also controls the data flow during a data read cycle to store the data processed by a read circuit 22B (Figure 1C) from the transducer 4 and transmitted to a read detect unit 22A over a connecting cable 22C and through a read formatter 22 to the buffer control unit 28. The compaction system 10 includes a compaction unit 16 and an auto blocking unit 18. The compaction unit 16 will be further discussed below with reference to Figure 1D.

The magnetic tape recording device 9 of Figure 1C includes a drive unit 6 operating under control of the motion control unit 3 to transport the tape 2 past the transducer 4 to accomplish the writing of the magnetic transitions onto the tape 2 and the subsequent reading of the transition.

The tape recording device 9 includes a supply reel motor 41B and a tachometer control unit 41A, a carriage 42A and a carriage control unit 42B, a take up reel 45 and its motor drive 43B and tachometer control unit 43A, a threading mechanism 44, various controls for a tape path 2A such as an idler 46, compliant tape guides 47 and a tape tension control unit 49. The tape medium 2 is contained in a cartridge 48A shown placed into the carriage 42A. The cartridge 48A, besides the tape 2, includes a supply reel 48B and a leader block 48C, shown connected for threading by the threading mechanism 44. Reference may be made to U.S. Patent 4,389,600 for a more complete description of the tape drive and control system shown in Figure 1C.

Referring now more particularly to Figures 1A to 1C of the drawings, like numbers indicate like parts and structural features in the various figures. In Figures 1A to 1C, a data processing system is shown including a magnetic tape recorder storage subsystem connected via its control unit 13 to a host system 11 including a plurality of central processing units.

The magnetic tape recorder storage subsystem includes the control unit 13 and the magnetic tape device 9. The control unit 13 provides transfer of data between a plurality of data utilisation devices, one indicated by way of example as being a reel-to-reel type of magnetic tape recorder 9, and the host system 11 via a plurality of channel adaptors 12. The host system 11 requests data transfer either to or from the device 9. All operations of the control unit 13 and the device 9 depend upon commands and other control data received from the host system 11 through the channel adaptors 12.

The total subsystem status is maintained in the control unit 13 via the status store 15. The status store 15 includes a plurality of registers containing bytes relating to device status, buffer status, channel status, and the like. Such status information reflects the selection status of the device 9, its busy status, contingent connection and all other status information necessary for operating the storage subsystem with the channel adaptors 12.

The programmed microprocessor 19 operates in accordance with a microcode program stored in the control store 121. Such microprograms enable the microprocessor 19 to manage the buffer control 28 completely to provide and supervise the data flow between the channel adaptors and the device 9. The microprocessor 19 supervises and enables the selection of the channel adaptors 12. A device adaptor 123, controlled and supervised by the microprocessor 19, controls the operation of the motion control unit 3. A separate device adaptor 123 controls each of the plurality of tape recorder devices 9 if such are included in the system.

The microprocessor 19, using known techniques, selects the microprograms of the control store 121 as commanded by the host CPU 11. Control data is supplied from the control store 121, including microprogramming instruction words. The microprocessor 19 is interrupt driven through a plurality of interrupt levels. These interrupts are supplied by the various elements of the control unit 13, the priority of each of which is preassigned in accordance with the functions to be performed in the control unit 13 and the tape recorder device 9.

A representation of the tape recorder device 9 is shown in Figure 1B. Reference may be made to U.S. Patent 4,125,881 for a more complete description of a control circuit usable for a reel-to-reel tape drive. Only the apparatus and procedure for an understanding of the data processing system being described is given herein. As shown in Figure 1B, the tape recorder device 9 includes the supply reel tachometer control unit 41A which is connected to the supply reel motor 41B. The supply reel motor 41B is driven by the motion control unit 3 to rotate reversibly the supply reel 48B shown located within the single reel cartridge 48A. The tachometer control unit 41A indicates to the motion control unit 3 the number of rotations and the rotational position of the motor 41B and the supply reel 48B. The take up reel tachometer control unit 43A is connected to the take up reel motor 43B that is reversibly driven by the motion control unit 23. The motor 43B drives the take up reel 45. The magnetic tape 2 takes a path, shown by a dotted line 2A, from the supply reel 48B to the take up reel 45 past the idler bearing 46, the air bearing guides 47 and the magnetic head 4. The tape path continues around the guide of the tension arm transducer 49 to the take up reel 45.

Thus, for the discussion of Figure IB, the motion control unit 3, after the entry of a supply reel 48A onto the clutch drive (not shown), activates the motor 41B. The entry of the cartridge 48A into the carriage 42A activates the carriage control unit 42B which in turn causes the motion control unit 3 to activate the motor 41B. The motion control unit 3 directs a threading operation by activating the threading mechanism 44 which will pull the tape through its path 2A past idler bearing 46, air bearing guides 47, magnetic head 4, and the tension arm transducer 49 onto the take up reel 45. In the reading of data from and/or the writing of data onto the tape 2 via the magnetic head 48, the speeds of the motors 41B and 43B are controlled by the motion control unit 3 through the tachometer control units 41A and 43A, respectively. The writing of data onto the tape 2 is accomplished through the write formatter unit 26 which places the data to be written into its format for placement onto the tape. The output of the write formatter unit 26 from the control unit 13 is directed to the write circuit 26A in the tape recorder device 9. The write circuit 26A controls the magnetic transducer 4 to accomplish the writing of the data onto the tape 2.

To retrieve or read the data that was written onto the tape 2, the read circuitry is activated. The magnetic transducer 4 will sense the magnetic transitions written onto the tape 2 and will direct its analog output to the read circuit 22B. The read circuit 22B amplifies the analog signals received from the magnetic transducer 4 and directs its output to the read detect unit 22A in the control unit 13. The read detect unit 22A circuitry converts the analog signal to a digital signal as required for the control unit 13. The output of the read detect unit 22A is directed to the read formatter unit 22 to direct the digital data read signals for storage in the buffer control unit 28.

The actual control of the operation of tape recorder device 9 as shown in Figure 1B is accomplished through the microprocessor 19 of the control unit 13. The device adaptor 123 includes tag control lines and bus data transfer lines which enable the control unit 13 to control and operate the tape recorder device 9 through the motion control 3 closely.

The microprocessor 19 controls the buffer control unit 28 to accomplish the reading of the data from and the writing of the data onto the tape and also through the device adaptor 123 and the motion control unit 3 controls the transport of the tape 2 over the magnetic transducer 4 to accomplish the actual reading and writing of the data itself.

The arrangement being described utilises four data processing devices as shown in Figure 1D. It should be evident that more or less processing devices could be used in parallel to accomplish the advantages of the arrangement being described.

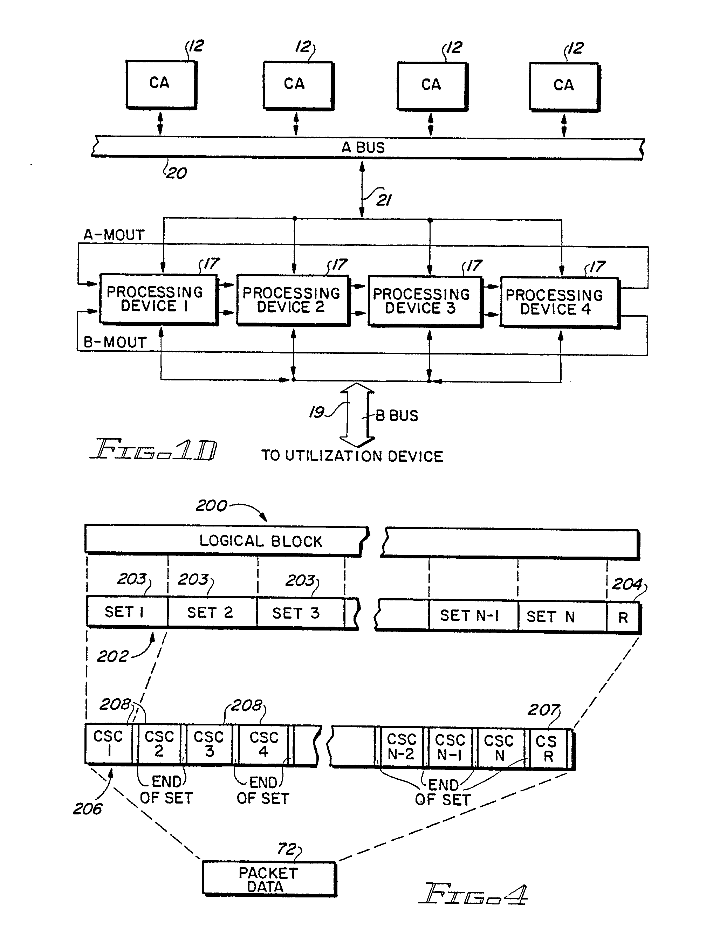

Referring now especially to Figure 1D, a plurality of data processing devices (PD) 17 is inserted into the standard read and write data flow that interconnects a plurality of channel adapters (CA) 12 with the data control unit 7 of device 9 so as to enable transducer 4 to write and read data to and from the recording medium 2. The data stream -from the host central processing unit is directed to one of the plurality of channel adapters 12, to interface with the four parallel processing devices 17 of the compaction unit 16. A CA command set, Extended Format, directs the data stream transfer through the channel adapter 12, into an A-bus 20, and along a line 21, to the plurality of parallel processing devices 17. The data stream from the A-bus 20 is directed to all of the processing devices 17, and it is an A-mout signal that controls the receipt and distribution of the data to and from the individual processing devices. That will be discussed in more detail later. The processing devices 17 receive the unformatted data from one adapter 12 and separate the unformatted data in the data stream into identical size blocks or sets of data. The individual sets of data are then directed to individual processing devices, PD 1-4, for processing of each set by a selected one of the plurality of processing devices 17. The processed sets of data are then reassembled into their original sequence and transmitted to a B-bus 19, for use by the data control unit 7 of the device 9. A more diagrammatic data flow diagram of two processing devices 17 and the interconnection of them is shown in Figure 2.

Referring to Figure 2, the data stream from the channel adaptors 12 is directed onto the A-bus 20, into input output control units 21 and 23, one for each of the processing devices PD 1 and PD 2, I/O control unit A-1 for PD 1 and I/O control unit A-2 for PD 2. The I/O control unit A-1 determines the set of data that is to be directed to processing device PD 1. The A-mout signal determines which I/O control unit is active at any particular period of time. Processing device PD 1 also includes a section of a rotary demultiplexer/multiplexer 25, shown as DMX/MXA-1. Sets of dashed and cross-hatching lines 27, connecting the rotary demultiplexer/multiplexer 25, DMX/MX A-1, and a rotary demultiplexer/multiplexer 29, DMX/MX A-2, of processing device PD 2, indicate that all of the rotary demultiplexer/multiplexers 25, 29 etc are interconnected in order to form one rotary demultiplexer and multiplexer unit that effectively controls the transfer of one set of data into each of the processing units 17.

Processing device PD 1 also includes an encode unit 56, and a decode unit 38. The output from the encode unit 36 is supplied to and the input to the decode unit 38 is received from a rotary multiplexer/demultiplexer 37,MX/DMX B-1. That is a resequencing unit for the output from encode unit 36, and a separation unit for the input to the decode unit 38. In the same way as the rotary demultiplexer and multiplexer 25 is illustrated, the rotary unit 37 MX-DMXB-1 is shown with sets of dashed and cross-hatched lines 39, to indicate that all of the rotary multiplexer/demultiplexers 37, 41 (in PD 2) are interconnected to form another rotary multiplexer and demultiplexer unit.

The processing device PD 1 also includes an input/output control unit 43 which controls the output of the data into the data utilisation device 9 and the input of data from the data utilisation device 9 into the processing device PD 1. The processing devices PD 1-4, operating in parallel as illustrated in Figure 1, therefore, include an input/output control unit 21, 23 and a rotary demultiplexer and multiplexer 25, 29 for the upper or A section of each of the processing devices and an I/O control unit 43, 43A and a rotary multiplexer and demultiplexer 37, 41 for the lower or B section of each of the processing devices.

As shown in Figure 2, the data stream is directed from the A-bus to the I/O control unit (21, 23) of each of the processing devices PD 1, PD 2. The A-mout signal directs which processing device is to receive a set of data out of the data stream. The first rotary demultiplexer and multiplexer in a processing device distributes the received set of data to the encode and decode units 36, 39 within the processing device. The lower or B section of each processing device likewise includes an I/O control unit 43, 43A and a rotary multiplexer/demultiplexer 37, 41 tied in with the other similar units of the other processing devices.

The data processing system being described utilises four data compaction units, two being shown in Figure 2. During a Channel Write operation, the compaction unit of each processing device compacts the data received on the upper or A section from the host processor and transfers the compacted data stream into the lower or B section and then through its I/O control to the utilisation device, i.e. the format control unit 5, the data control unit 7 and the transducer 4 to write the compacted dated onto the tape medium 2, see Figure 1A. During a Channel Read operation, the data stream from the tape medium 2 is directed to each processing device in turn according to the delineation signals separating the compacted sets of data. The data is formatted in the format control unit 5 for transfer to the compaction system 10, in particular to the auto blocking unit 18 and to the processing device 17 of the compaction unit 16. The compacted data stream is directed to the lower or B section for direction to a decode unit for decompaction. The decompacted data is then transferred to the upper or A section for sequencing and transfer back to the A-bus for use by the host central processing unit.

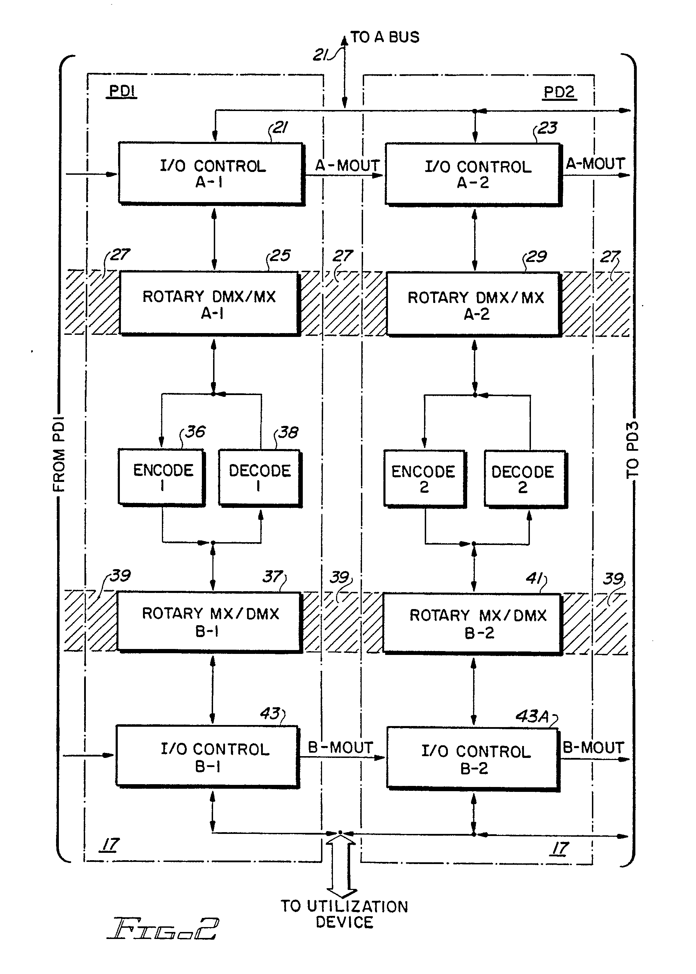

For the actual apparatus included into the processing devices illustrated in Figure 1D, reference is made to Figure 3. As shown in Figure 3, each processing device 17, and in particular processing device PD 1, includes an event counter -A 132, an interface control unit -A 134, and a storage device -A 136. These devices are unique to the upper or A section of processing device 17. The lower or B section of the processing device also includes an event counter -B 138, a storage device -B 140 and an interface control -B 142. Each processing device also includes one encoder 114, one decoder 124, and a speed matching buffer 144. The event counters A and B are used in the upper and lower sections respectively in each of the processing devices to control and verify the splitting and merging of the data sets being passed therethrough. By incorporating in the processing device the components as shown in Figure 2, the need for separate multiplexer/demultiplexer control units in the upper and lower section of each processing device is eliminated.

Assuming that processing device PD 1 is activated which could be either through the system initialisation process or through the transfer of data flow control from a previously activated processing device which would be processing device PD 4. The signal A-mout transfers the control of data flow from one processing device to the next. During the Write Data Operation , which is when the data stream from the host CPU 11 is compacted and written onto the tape medium 2, the stream of data is first transmitted into the storage device 136. The storage device 136 signals to the event counter 132 when one complete set of data has been received from the data stream. For this preferred embodiment, one set of data is 512 bytes. The event counter 132, in turn, signals to the interface control unit 134 that this processing device PD 1 has received its section of data, i.e, one set, and the next set of data in the data stream should be received by the processing device PD 2.

During the Write operation, the set of data is transmitted using the solid line bus shown in Figure 3. The codes for the different lines are shown in the lowest portion of Figure 3 and are a solid single line 146 that signifies the control lines controlling the different blocks, a solid double line 148 that signifies the write data flow (WDF) and a dashed double line 150 that signifies the read data flow (RDF) signal flow through the processing device PD 1. The set of data received in processing device PD-1 is transmitted from the storage device -A 136 to the encoder 114 for compaction of the set of data. After the compaction process is completed, the encoder 114 transmits the compacted data set to the speed matching buffer 144. The compacted data is transmitted to the speed matching buffer 144 for storage in order to match the output of the encoder 114 with that of the decoder. The just compacted data is transmitted from the speed matching buffer 144 to the decoder 124 for decompaction and checking. Essentially the transfer of the data from the speed matching buffer 144 to the decoder 124 during the write operation is a readback check to verify that the set of data received in PD-1 can essentially be encoded and decoded. When the checking operation has been completed the compacted data is transferred to the storage device -B 140 where it will await the control by the event counter -B 138 and the interface control unit -B 142 to signal that the compressed set of data can be placed onto the B-bus for transfer to be formatted for writing onto the tape medium 2. A delineation signal is placed between each compressed set of data by the storage device 140 to identify each compressed set when combined and when retrieved for decompaction (see below for a description of this process).

During the Read or Retrieve Data operation to retrieve data from the medium 2, the compacted sets of data are received from the tape medium and are transmitted to the storage device -B 140 after being amplified, digitised and formatted as shown in Figures 1A to 1C. The compacted bits of data are stored within the storage device -B 140 until the entire compacted set of data is received. At this time the processing device PD 1 is activated either at system initialisation or as activated by transfer of data flow control by the B-mout signal from processing device PD 4. The delineation signals placed between successive compacted sets of data activate the transfer of the data flow control between the processing devices which in turn activates the interface control unit 142 to transfer control on the B-mout signal line to the next processing device PD 2. Processing device PD 2, can then receive its set of data for use within its compaction process.

Following the RDF signal path, the stored compacted set of data is transferred to the decoder 124 where it is decompacted and transmitted to storage device 136 on line 141 for storage until the signal is given to the interface control unit 134 indicating that the storage device 136 contains the 512 bytes of a decompacted set of data and can transmit the data onto the A-bus 20 and then to the channel adapters 12. After the decompacted data has been transferred, the event counter -A 132 signals the interface controller -A 134 to transfer control via the A-mout signal line to the next processing device PD 2. This is done so that the next set of data can be transferred from its storage device A of the device PD 2, onto the A-bus and eventually to the channel adaptor.

Essentially the storage device -A 136, the event counter -A 132, and the interface control unit -A 134 provide a multiplexer/demultiplexer for the upper section A of processing device PD 1. Similarly, the storage device -B 140, together with the event counter -B 138, and the interface control -B 142, provide a multiplexer/demultiplexer for the lower section B of the PD 1.

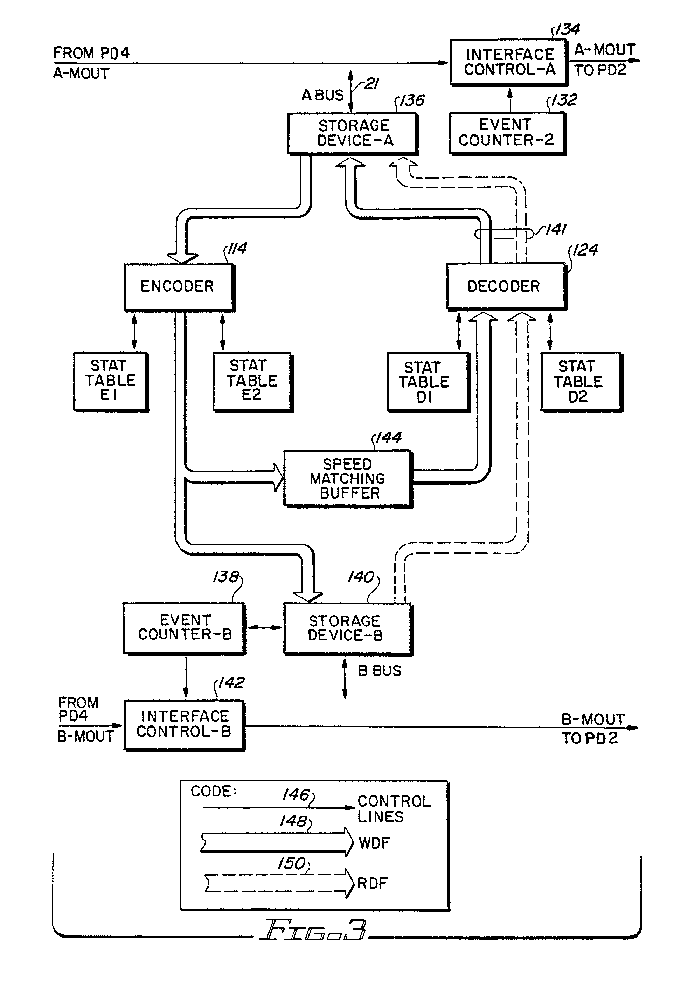

Referring to Figure 4, the formatting of the data stream flowing through the processing device PD 1 of Figure 3 is illustrated. Data from the A-bus 20 is shown as a logical block data stream 200. The logical block data stream 200 is divided into equal lengths of data called sets 203 as shown in data stream 202. The identification of sets is done in device PD 1 so as to make each set 203 an identical length of data except for the R or remainder portion 204 which contains the remaining portion of the data that was not otherwise placed into sets. These sets of data are then directed for compaction where they are shortened to a lesser amount of data as shown on the data storing of reference number 206. The remainder portion 204 is compacted into a separate compacted character set 207, so as to compact only the remainder portion and to identify it as something possibly less than a complete set of data. The compacted character sets 208 are then directed for inclusion into a single packet of data 72 as shown in Figure 4 for writing on the tape medium 2 as previously described. The end of set signals are the delineation signals separating and identifying the individual compacted sets of data 208 (see above for a description of the use of these delineation signals).

In the data processing system being described, it is possible for there to be any number of processing devices in the processing system. The tape subsystem of Figure 1A determines what that number is, for the best mode of the processing system being described, and positions that number in a register that is located within each processing device.

During a Channel Write operation, each processing device 17 receives a 512 byte set of data sequentially from the serial data stream received from the channel adapters 12 into its upper section A, beginning with PD 1, followed by PD 2, then PD 3 and PD 4, and again returning to PD 1. This packetising process of the data transfer directs the 512 byte set of data to each processing device in sequence until the entire data stream has been received from the host channel. Each processing device 17 contains a 512 byte buffer in its A or upper section, storage device -A 136 for instance for PD 1, to receive and hold the 512 byte set until its encoder 114 empties the storage device 136 to compact the set of data. This allows the next processing device 17 in sequence to receive and compact its respective 512 byte set. By the time a set of data is received by PD 4, PD 1 will have compacted enough of its last set of data, having emptied a minimum of its set of data from storage device 136, to be ready to receive its next set of data, provided the transfer rate from the host channel does not exceed the combined throughput rate of the encoders within each processing device. In a preferred embodiment, the throughput rate of each encoder is 1.25 megabytes to give a total combined system throughput rate of 5.0 megabytes per second (4 x 1.25) for a four processing device system.

Should the transfer rate from the host 11 exceed the combined throughput rate of the processing system, rendering a given processing device temporarily unable to begin receiving its next set of data, that processing device will then suppress the data transfer from the channel adaptors 12 until such time as enough of its storage device -A 136 has been emptied, thereby enabling it to resume data transfer. Each storage device -A 136 continually checks that more than 128 bytes have been received by the encoder 114 subsequent to the last data written into storage device -A from the host 11 channel. During the time when a given storage device 136 is receiving data from the host 11, should the number of available storage device-A addresses shrink to 128, the processing device suppresses further data transfer from the host channel. The subsequent processing device will start to receive data, nullifying the current processing device's suppression of the data, provided that greater than 128 bytes of space are available at the beginning of its storage device A of the subsequent processing device.

Each compaction unit 16 stores the compacted set of data output from its encoder in its lower section storage device -B 140, which is also 512 bytes in size. The compacted sets of data from the lower section storage device -B 140 are transferred in sequence to the B-bus for writing on the tape medium 2. By the time PD 4 has finished transferring a compacted set of data in the medium 2, device PD 1 will be ready to begin transferring its next set of data stored in the lower section B. This form of data transfer continues until all compacted sets of data from the data stream have been sent for writing on the tape medium 2.

During a Channel Read operation, each processing device 17 receives a compacted set of data sequentially from the serial data stream from the tape medium 2 into the lower section storage device -B 140, beginning with PD 1, followed by PD 2, then PD 3 and PD 4 and again returning to PD 1. This packetising process of data transfer continues until the entire compressed data stream has been received from the tape medium. Each processing device contains a storage device B, in its lower section B, to receive and hold a compacted data set while its internal decoder 124 empties the lower section storage device B, to decompact the set of data. This allows the next processing device 17 to receive and decompact its respective compacted set of data in sequence. By the time the compacted set is received by the PD 4, PD 1 will have decompacted enough of its last set, having emptied a minimum portion of its storage device -B 140, to be ready to receive its next compacted set of data.

Each processing device 17 stores the decompacted data set output from its decoder 124 in its upper section storage device -A 136. Storage device A is 512 bytes in size as discussed above. The decompacted sets from the storage device -A 140 are transferred in sequence to the host 11 channel as originally received. By the time PD 4 has received a data set for transfer, PD 1 should be ready to begin transferring its next set to the host channel, provided the transfer rate from the tape medium does not exceed the combined throughput rate of the decoders within the data processing system.

Should the transfer rate to the host channel exceed the combined throughput rate of the data processing system, rendering a given compaction unit 16 temporarily unable to begin transferring its next data set, that unit 16 will then suppress data transfer to the host channel until such time as enough of its upper section storage device -A has been filled enabling it to resume data transfer. Each compaction unit 16 continuously checks that data is available in its upper section storage device -A subsequent to the last upper section storage device -A address being read from by the host channel interface. During the time when a given compaction unit 16 is transferring data to the host 11, should there be no more data available in the upper section storage device -A, the compaction unit 16 suppresses data transfer to the channel as the last byte is transferred. Also, while a compaction unit 16 is transferring data to the host channel 11, once its upper section storage device -A has been emptied, the unit will always suppress data transfer as the last byte is transferred. The subsequent unit 16, which is to begin transferring the next byte of data, will enable data transfer, nullifying the current unit's suppression, provided enough of its upper buffer has been filled.

Further description of the processing of the data on a tape medium system is described in U.S. Patent 4,435,762.

## Claims

1. A data processing system comprising
a plurality of data processing devices (17) adapted to perform data processing operations on an input stream of data,
a control system (13) for operating said data processing devices in parallel, and
selection means (12) for selecting which data processing device is to receive for processing each item of data in said data stream,
characterised in that said control system comprises dividing means for dividing said input stream of data into a sequence of sets of data (203),

operation transfer control means (136) for indicating when a set of data has been fully received by a data processing device, and

means (134) for operating said selection means in response to the output from said operation transfer control means to select

a first data processing device to receive for processing a first set of data,

a second data processing device to receive for processing the next set of data in the sequence, and

a different one of the plurality of data processing devices to receive for processing each subsequent set of data in the sequence of data.

2. A data processing system as claimed in Claim 1 characterised in that, when all of the data processing devices have received for processing one set of data, said selection means selects the first data processing device to receive for processing the next set of data in the sequence and repeats the selection operation until all the sets of data have been received for processing.

3. A data processing system as claimed in either of the preceding claims characterised in that said control system comprises indicating means for indicating when a data processing device is unable to receive a set of data for processing and said selection means operates in response to the output of said indicating means to select another data processing device to receive the next set of data for processing.

4. A data processing system as claimed in any one of the preceding claims characterised in that said selection means always selects the data processing devices in the same sequence to receive sets of data for processing.

5. A data processing system as claimed in any one of the preceding claims characterised in that said control system comprises means for making available at the output from said data processing system said sets of data after processing in the same order as they are processed by said data processing devices.

6. A data processing system as claimed in any one of the preceding claims characterised in that, each of said data processing devices performs a data compression operation on each set of data.

7. Data processing apparatus comprising

means (11) for generating a stream of data,

a data processing system as claimed in any one of the preceding claims, and

output means (9) for receiving the data output from said data processing system.

8. Data processing apparatus as claimed in claim 7 characterised in that said output means (9) is a magnetic tape storage device.

FIG-1A

*Fig-1B*

HOST CPU'S
*11*

*13*

CONTROL UNIT

CHANNEL ADAPTORS *12*

*15*
STATUS STORE

*20*

*14*
EXTENDED FORMAT

*19*
MICRO-PROCESSOR

*24*

COMPACTION SYSTEM *10*

*16*
COMPACTION UNIT

*18*
AUTO BLOCKING

*121*
CONTROL STORE

*123*
DEVICE ADAPTER

*28*
BUFFER CONTROL

*23A*

*22*
READ FORMATTER

*26*
WRITE FORMATTER

*22A*
READ DETECT

*26B*

*22C*

TO MOTION CONTROL

FROM READ CIRCUIT

TO WRITE CIRCUIT

TO/FROM FIG. IC

12

TO / FROM FIG. 1B

FIG.1C

*Fig-1D*

TO UTILIZATION DEVICE

*Fig-4*

TO A BUS

PD1             PD2

| I/O CONTROL A-1 (21) | A-MOUT | I/O CONTROL A-2 (23) | A-MOUT |

ROTARY DMX/MX A-1 (25)   27    ROTARY DMX/MX A-2 (29)   27

27

| ENCODE 1 (36) | DECODE 1 (38) | | ENCODE 2 | DECODE 2 |

FROM PD1

TO PD3

ROTARY MX/DMX B-1 (37)   39    ROTARY MX/DMX B-2 (41)   39

39

| I/O CONTROL B-1 (43) | B-MOUT | I/O CONTROL B-2 (43A) | B-MOUT |

17                          17

TO UTILIZATION DEVICE

FIG.2

*Fig. 3*